# EUROPEAN PATENT APPLICATION

(11) **EP 4 807 885 A1**
(43) Date of publication of application: **16.09.2026**
(21) Application number: 25738842.1
(22) Date of filing: 08.01.2025
(51) Int. Cl.: H01M 50/502, H01M 50/519, H01M 10/42, H01M 10/04, H01M 10/48, H01M 50/569, H01M 50/251, H01B 7/04, H01B 7/08, H01B 7/40

(54) **CELL MODULE ASSEMBLY, BATTERY PACK, AND ENERGY STORAGE SYSTEM**

(30) Priority: 12.01.2024 KR 20240005422
(71) Applicant: LG Energy Solution, Ltd., Seoul 07335 (KR)
(72) Inventor: LEE, Dong Geun, Daejeon 34122 (KR)
(74) Representative: Plasseraud IP
(86) International application number: PCT/KR2025/000388
(87) International publication number: WO 2025/150875

(57) **Abstract**

A cell module assembly according to an embodiment of the present disclosure comprises: a battery cell stack in which a plurality of battery cells are stacked; a busbar housing disposed on a surface toward which the electrode lead of the battery cells faces; an ICB (Inter Connection Board) including a printed circuit board for transmitting data between the battery cells and a BMS (Battery Management System); and a sensing cable that electrically connects between the ICB and the BMS, wherein the busbar housing comprises at least one sensing cable fixing unit having a shape that protrudes from an outer surface of the busbar housing and is extended in a curved state so as to fix the sensing cable, and wherein the sensing cable is inserted and fixed between the outer surface of the busbar housing and the sensing cable fixing unit.

## Description

### [TECHNICAL FIELD]

### Cross-Reference to Related Application(s)

This application claims priority to and the benefit of Korean Patent Application no. KR10-2024-0005422, filed on January 12, 2024, in the Korean Intellectual Property Office, the disclosure of which is incorporated herein by reference in its entirety.

The present disclosure relates to a cell module assembly, a battery pack and an energy storage system, and more particularly, to a cell module assembly, a battery pack and an energy storage system, which effectively fix a sensing cable without the need for additional members to simplify the processes and structure.

### [BACKGROUND ART]

In modern society, as portable devices such as a mobile phone, a notebook computer, a camcorder and a digital camera, as well as energy storage systems (ESS), has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very low self-discharge rate and high energy density.

Such secondary batteries are widely used in not only small devices such as portable electronic devices, but also medium- and large-scale devices such as electric vehicles and energy storage devices(ESS), and the use frequency thereof is rapidly increasing. Furthermore, in recent years, there is an increasing tendency to use residential battery packs for the purpose of storing electricity.

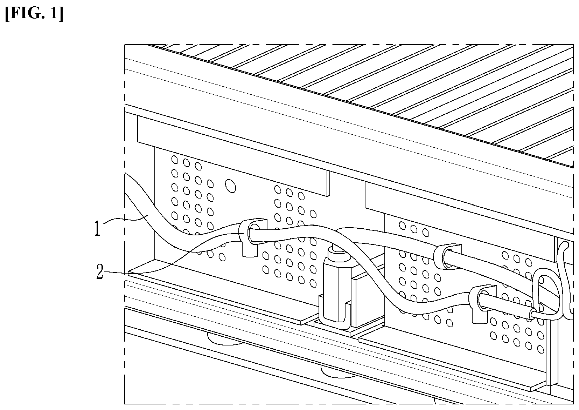

On the other hand, referring to FIG. 1, in the cell module assembly, battery pack and energy storage system according to the prior art, a cable 1 such as a sensing cable or the like is further provided with a fixing member 2 such as a cable tie or a ring type, and fixed to the cell module assembly and the battery pack.

### [DETAILED DESCRIPTION OF THE INVENTION]

### [Technical Problem]

It is an object of the present disclosure to provide a cell module assembly, a battery pack and an energy storage system, which effectively fix a sensing cable to a busbar frame without the need for additional members, thereby increasing energy density, simplifying the process, and reducing costs.

However, the technical objects to be solved by embodiments of the present disclosure are not limited to the above-described objects, and can be variously expanded within the scope of the technical idea included in the present disclosure.

### [Technical Solution]

A cell module assembly according to an aspect of the present disclosure comprises: a battery cell stack in which a plurality of battery cells are stacked; a busbar housing disposed on a surface toward which the electrode lead of the battery cells faces; an ICB (Inter Connection Board) including a printed circuit board for transmitting data between the battery cells and a BMS (Battery Management System); and a sensing cable that electrically connects between the ICB and the BMS, wherein the busbar housing comprises at least one sensing cable fixing unit protruding from an outer surface of the busbar housing and having a bent and extending shape to fix the sensing cable, and the sensing cable may be inserted and fixed between the outer surface of the busbar housing and the sensing cable fixing unit.

The sensing cable may be inserted and fixed into an opening between the outer surface of the busbar housing and the sensing cable fixing unit.

A direction toward which at least one opening among the plurality of sensing cable fixing units faces and a direction toward which at least another opening among the plurality of sensing cable fixing units faces may be opposite to each other.

The sensing cable fixing unit comprises a first extension part that is protruded and extended from the outer surface of the busbar housing; and a second extension part that is bent and extended from the first extension part, and the length of the second extension part may be equal to or greater than the length of the first extension part.

The cell module assembly further comprises a protrusion that is bent and extended again from the end of the second extension toward the busbar housing, wherein the sensing cable may be inserted and fixed between the outer surface of the busbar housing and the end of the protrusion of the sensing cable fixing unit, and the inserted sensing cable may be caught by the protrusion and prevented from being detached to the outside form the sensing cable fixing unit.

The second extension extends downward, and the opening into which the sensing cable is inserted between the outer surface of the busbar housing and the sensing cable fixing unit may face downward.

The sensing cable may be inserted and fixed into an opening between the outer surface of the busbar housing and the end of the second extension part of the sensing cable fixing unit, and the end of the second extension part may be rounded.

The end of the second extension part may further comprise an inclined surface so that the sensing cable inserted into the opening slides into the sensing cable fixing unit.

The first extension part may extend in a horizontal direction, the second extension part may extend in a vertical direction, and an opening in which the sensing cable is inserted between the outer surface of the busbar housing and the sensing cable fixing unit faces toward any one of the upper part or the lower part.

The sensing cable fixing unit may have a hook shape.

The sensing cable may be disposed along a width direction of the busbar housing, and a plurality of the sensing cable fixing units may be provided and disposed along a width direction of the busbar housing.

The sensing cable fixing unit may be formed integrally with the busbar housing.

The busbar housing further comprises a sensing cable guide unit having a pair of guide projections that protrude from an outer surface of the busbar housing so as to guide the sensing cable, and the sensing cable may pass between the pair of guide projections.

The guide protrusion may have a rib shape.

The sensing cable guide unit may be formed on at least one of a side surface of the busbar housing and a side edge of the busbar housing.

The cell module assembly further comprises a pair of end plates that are disposed at the outermost part of the battery cell stack and face each other, wherein the BMS may be disposed on an outer surface of one end plate among the pair of end plates, the busbar housing may be provided as a pair of busbar housings and respectively provided at both surfaces of the battery cell stack, and the pair of end plates respectively connect both ends of the pair of busbar housings, and the sensing cable fixing unit may be provided on the busbar housing closer to the BMS among the pair of busbar housings.

The cell module assembly further comprises a pair of end plates that are disposed at the outermost part of the battery cell stack and face each other, wherein the BMS may be disposed on the outer surface of one of the end plates of the pair, the busbar housing may be provided as a pair of busbar housings and respectively provided at both surfaces of the battery cell stack, the pair of end plates may respectively connect both ends of the pair of busbar housings, and the sensing cable fixing unit may be provided on each of the pair of busbar housings.

The sensing cable may be a FFC (Flexible Flat Cable).

The cell module assembly further comprises: a thermistor disposed within the battery cell stack and sensing the temperature of the battery cell; and a thermistor cable electrically connected between the thermistor and the ICB, wherein the busbar housing further comprises a thermistor cable guide unit concavely formed from the upper end of the busbar housing, and the thermistor cable may pass through the thermistor cable guide unit.

The thermistor cable guide unit comprises: a first concave part concavely formed in vertical direction from the upper end of the busbar housing; and a second concave part concavely formed in a horizontal direction from the outer surface of the busbar housing, wherein the thermistor cable may pass through the first concave part so as to come out from the thermistor to the outside of the busbar housing, and may change the extension direction at the second concave part to pass along the top of the ICB.

The busbar housing further comprises a thermistor cable fixing unit having a hook shape and disposed together with the thermistor cable guide unit at the upper end of the busbar housing, and the thermistor cable may pass between the thermistor cable guide unit and the thermistor cable fixing unit.

A battery pack according to another aspect of the present disclosure may comprise: a cell module assembly according to the above-described embodiments, an electrical unit including the BMS disposed on one surface of the cell module assembly; and a pack case that houses the cell module assembly and the battery unit.

An energy storage system according to yet another aspect of the present disclosure may comprise a battery pack according to the above-described embodiments.

### [Advantageous Effects]

According to the present disclosure, a sensing cable can be easily fixed to a busbar frame without the need for a separate member for fixing the sensing cable, thereby increasing energy density, simplifying the process, reducing costs, and improving process efficiency.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 shows a cell module assembly according to the prior art.
FIG. 2 is a perspective view of a cell module assembly and an electrical unit according to an embodiment of the present disclosure.
FIG. 3 is a partially enlarged view of FIG. 2.
FIG. 4 is an exploded perspective view of FIG. 2.
FIG. 5 is a side view of FIG. 4.
FIG. 6 is a reference diagram of the busbar electrode and ICB of FIG. 2.
FIG. 7 is an enlarged view of an embodiment of the sensing cable fixing unit of FIG. 2.
FIG. 8 is an enlarged view of another embodiment of the sensing cable fixing unit of FIG. 2.
FIG. 9 shows a case where a sensing cable is assembled to the sensing cable fixing unit of FIG. 7.
FIG. 10 shows a case where a sensing cable is assembled to the sensing cable fixing unit of FIG. 8.
FIG. 11 is a reference diagram of FIG. 2, showing the cell module assembly and electrical unit of FIG. 2 as viewed from a different angle.
FIG. 12 is an enlarged view of an embodiment of the sensing cable guide unit of FIG. 2.
FIG. 13 is an enlarged view showing a state in which the sensing cable is mounted on the sensing cable guide unit of FIG. 12.
FIG. 14 is a perspective view showing a state in which only the thermistor assembly is separated from FIG. 11.
FIG. 15 is an enlarged view of the thermistor cable guide unit and thermistor cable fixing unit of FIG. 11, but showing a state before the thermistor cable is mounted.
FIG. 16 is an enlarged view showing a state in which the thermistor cable is mounted on the thermistor cable guide unit and the thermistor cable fixing unit of FIG. 11.
FIG. 17 shows a case in which the cell module assembly and electrical unit in FIGS. 2 to 16 are housed in a pack case to form a battery pack.
FIG. 18 shows the battery pack completed by assembling the components of the battery pack of FIG. 17.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Now, specific embodiments of the present invention will be described with reference to the accompanying drawings.

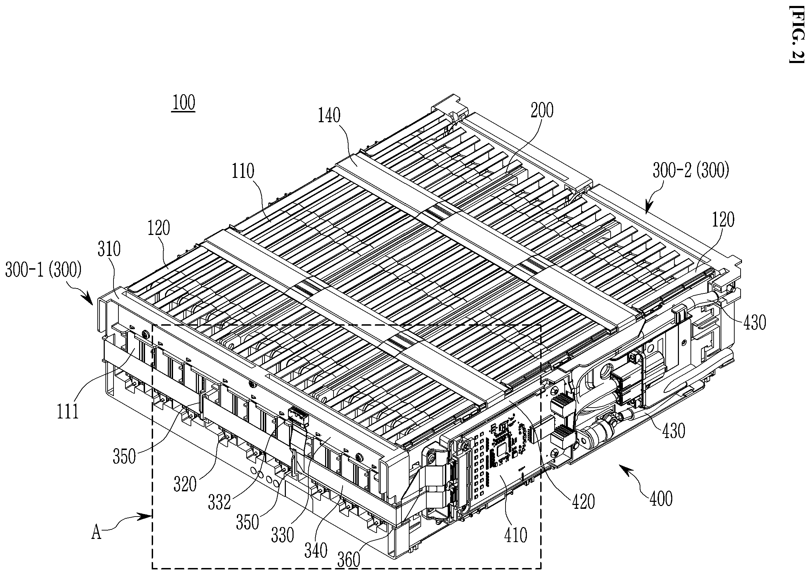

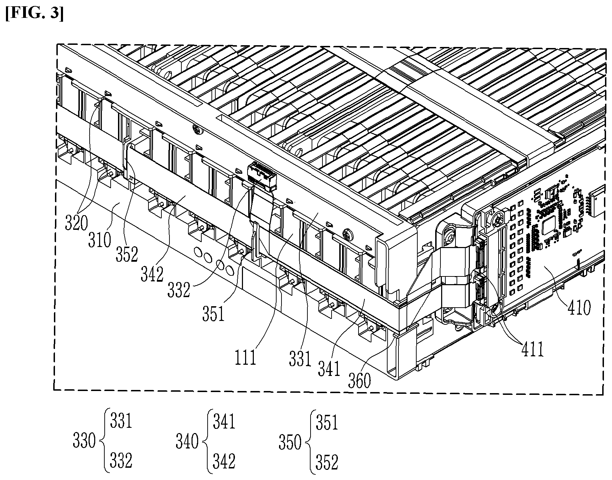

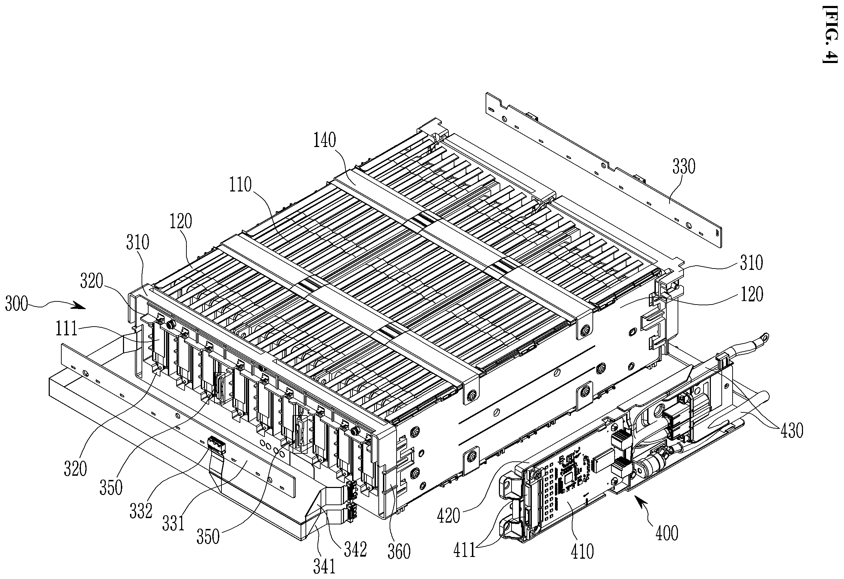

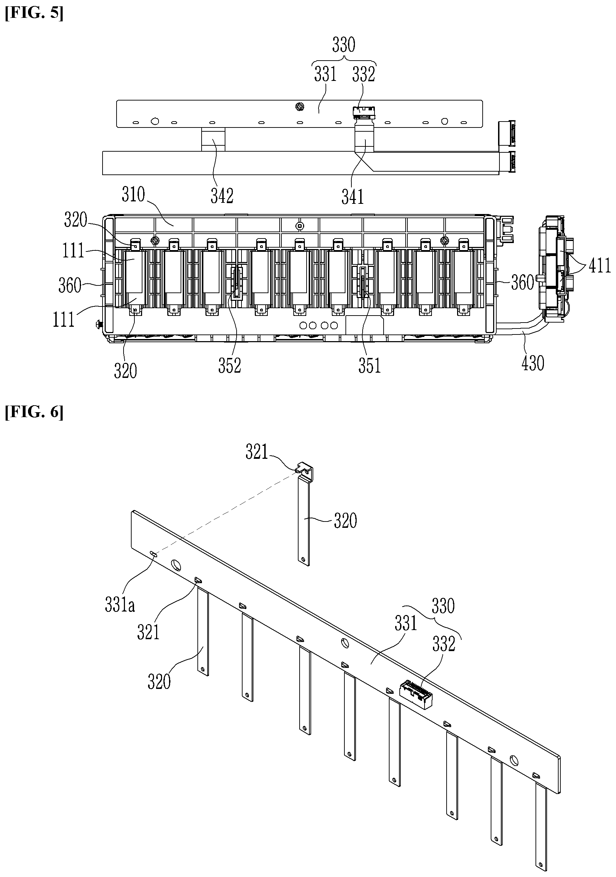

FIG. 2 is a perspective view of a cell module assembly and an electrical unit (electrical device assembly) according to an embodiment of the present disclosure. FIG. 3 is a partially enlarged view of a section A of FIG. 2. FIG. 4 is an exploded perspective view of FIG. 2. FIG. 5 is a side view of FIG. 4.

First, referring to FIG. 2, a plurality of battery cells 110 are provided to form a battery cell stack. The cell module assembly 100 may include the battery cell stack, an end plate 120, and a busbar housing assembly 300. It may further include a blocking member 200.

A pair of end plates 120 are provided on the outermost side of the battery cell stack, respectively. The end plates 120 are disposed side by side in parallel with the battery cells 110. Further, a pair of busbar housing assemblies 300 are disposed on the surface toward which the electrode leads 111 of respective battery cells 110 of the battery cell stack face. In the example of FIG. 2, a pair of busbar housing assemblies 300 are disposed on both side surfaces of the battery cell stack. Each of the busbar housing assemblies 300 is disposed in a direction orthogonal to the longitudinal direction of the battery cell 110. Further, a pair of end plates 120 are disposed respectively on a front surface and a rear surface of the battery cell stack. A pair of end plates 120 are respectively connected between respective two ends of the pair of busbar housing assemblies 300.

The busbar housing assembly 300 including the sensing cable fixing unit 350 according to an embodiment of the present disclosure will be described in more detail below with reference to FIG. 3 and the like.

Referring again to FIG. 2, the end plate 120 may be made of, for example, a metal material, such as aluminum, iron, stainless steel or the like. The busbar housing assembly 300 includes a busbar housing 310 in which a busbar electrode 320 and an ICB (Inter Connector Board) 330 are disposed, wherein the busbar housing 310 may be made of, for example, a plastic material, and may be manufactured by plastic injection molding. In addition, the busbar housing 310 may be manufactured by plastic injection molding integrally with a sensing cable fixing unit 350 which will be described later.

In the example of FIG. 2, each of the upper side and the lower side between a pair of end plates 120 may include at least one strap 140 that connects between the pair of end plates 120. The strap 140 strengthens the binding of the cell module assembly 100. More specifically, it strengthens the binding of the pair of end plates 120 and the plurality of battery cells disposed between them. This makes it possible to prevent the plurality of battery cells from being misaligned.

The blocking member 200 is disposed in contact with a large area of the battery cell 110, and the blocking member 200 is disposed between adjacent battery cells 110 and/or between the outermost battery cell 110 of the battery cell stack and the end plate 120. The blocking member 200 can block flames, sparks, and the like emitted from a battery cell 110 where a thermal event has occurred, from propagating to the adjacent battery cell 110, thereby preventing thermal runaway between the cells. The blocking member 200 may be disposed between a plurality of battery cells 110. In the example of FIG. 2, a case where a blocking member 200 is disposed for every six battery cells 110 is shown as an example. The present disclosure is not limited to those shown in the figures, and can be modified and changed in various different ways.

The blocking member 200 has a substantially plate-shaped shape. The blocking member 200 includes a support plate and a swelling pad. A plurality of blocking members 200 may be included depending on the number of battery cells. Further, as described above, the blocking member 200 may be stacked together with the battery cells 110 to form a cell module assembly 100.

The support plate may be composed of, for example, a metal material, a plastic material, or a combination thereof. The metal material may be composed of, for example, aluminum, iron, stainless steel, or a combination thereof. The plastic material may be composed of, for example, a high-strength plastic such as reinforced plastic.

The outermost surface of the blocking member 200 includes a pair of swelling pads. The swelling pads may be composed of silicone, plastic, or a combination thereof. In the case of a plastic material, it may be composed of, for example, a ductile plastic, such as polyurethane foam (PU foam). The swelling pad can function as a buffer when the battery cell 110 swells.

Hereinafter, the busbar housing assembly 300 will be described in more detail with reference to FIGS. 2 to 16. First, FIG. 3 is an enlarged view of a section A of FIG. 2 for the ease of understanding. FIGS. 4 and 5 shows a state in which an ICB 330 of FIG. 2, a sensing cable 340 connected thereto, and an electrical unit 400 including a BMS 410 are separately exploded for the ease of understanding. FIG. 4 corresponds to a perspective view, and FIG. 5 corresponds to a side view.

First, before describing the busbar housing assembly 300, the electrical unit 400 will be briefly explained. The electrical unit 400 is disposed on one surface of the cell module assembly 100 (the front surface of the cell module assembly 100 in the embodiment of FIG. 2). The example of FIG. 2 shows a case where the electrical unit 400 is disposed on the outer surface of the end plate 120 disposed on the front surface of the cell module assembly 100. The electrical unit 400 includes a BMS 410, an electric unit housing 420 that houses each component of the electrical unit 400 (e.g., BMS 410, power cable 430, etc.), and a power cable 430. The BMS 410 includes a connector terminal 411 to be electrically connected to the sensing cable 340. In addition, the electrical unit 400 may include various components for controlling or managing charge/discharge of the battery pack, such as a relay, a fuse, and a current sensor. Each component of the electrical unit 400 can be realized by adopting an electrical unit provided in a typical battery pack, and therefore, a more detailed description of the electrical unit 400 will be omitted.

A pair of busbar housing assemblies 300 are disposed on both side surfaces of the battery cell stack. The busbar housing assembly 300 includes a busbar housing 310, a plurality of busbar electrodes 320 disposed in the busbar housing 310, and an ICB 330.

A busbar electrode 320 is disposed on the outer surface of the busbar housing 310, and a plurality of openings are included in the vicinity of the location where the busbar electrodes 320 are disposed. The electrode lead 111 of the battery cell 110 passes through an opening of the busbar housing assembly 300 and is coupled to the busbar electrode 320. For reference, in the drawings of the present disclosure, the respective electrode leads 111 of adjacent battery cells 110 may pass through an opening formed in the busbar housing 310 to couple to each other, and the busbar electrode 320 is coupled thereon.

Further, an ICB 330 is disposed on the outer surface of the busbar housing 310. In an embodiment of the present disclosure, the ICB 330 is disposed on the upper part of the busbar electrode 320.

The ICB 330 transmits sensing data between the battery cell 110 and the BMS 410. The ICB 330 is a board equipped with at least one element so as to transmit sensing data, and includes a printed circuit board (PCB) 331 having a circuit pattern formed on an insulating layer and a sensing cable connector 332 to which a sensing cable 340 is connected. The ICB 330 senses current and/or voltage in a battery cell 110 and transmits the sensed data to the BMS 410 through the sensing cable 340. In addition, data for maintaining and managing the battery cell 110 in the BMS 410 is transmitted to the ICB 330 via the sensing cable 340 and ultimately controls the battery cell 110 electrically connected to the ICB 330.

Furthermore, data related to the current and/or voltage of the battery cell 110 via the electrode lead 111 of the battery cell 110 is transmitted to the printed circuit board 331 of the ICB 330 via the busbar electrode 320 coupled to the electrode lead 111. For reference, referring to the reference diagram of the busbar electrodes and the ICB in FIG. 6, a plurality of busbar electrodes 320 are electrically connected to the ICB 330 disposed on the upper part of the busbar housing 310. The upper end of the busbar electrode 320 includes a fitting pin-shaped connection part 321 that is bent and extended from the main body of the busbar electrode 320 to which the electrode lead 111 is coupled, and the connection part 321 of the busbar electrode 320 is connected to an opening (hole)-shaped connection part 331a provided on the printed circuit board 331. The connection part 321 of the busbar electrode 320 may be connected to the connection part 331a of the printed circuit board 331, for example, by soldering.

Referring again to FIGS. 2 to 5, the sensing cable 340 is disposed to extend along the perimeter of the battery cell stack from the sensing cable connector 332 coupled to the printed circuit board 331 of the ICB 330, and is coupled to the connector terminal 411 of the BMS 410.

According to an embodiment of the present disclosure, the busbar housing assembly 300 includes a sensing cable fixing unit 350. A sensing cable fixing unit 350 for fixing the sensing cable 340 is provided on the outer surface of the busbar housing 310. The sensing cable fixing unit 350 may be provided on an outer surface of the busbar housing 310, for example, on the front surface thereof. In the present specification, a surface with large area among the outer surface of the busbar housing 310 is referred to as the front surface. The sensing cable 340 passes over the busbar housing 310, and the sensing cable 340 is more easily assembled and fixed by the sensing cable fixing unit 350 provided in the busbar housing assembly 300.

The sensing cable 340 is disposed along a width direction of the busbar housing 310 (the direction from one end plate 120 toward the other end plate 120, the direction in which the plurality of busbar electrodes 320 are disposed). When a plurality of sensing cable fixing units 350 are provided, the plurality of sensing cable fixing units 350 are also disposed along a width direction of the busbar housing 310. At this time, the plurality of sensing cable fixing units 350 are disposed spaced apart from each other.

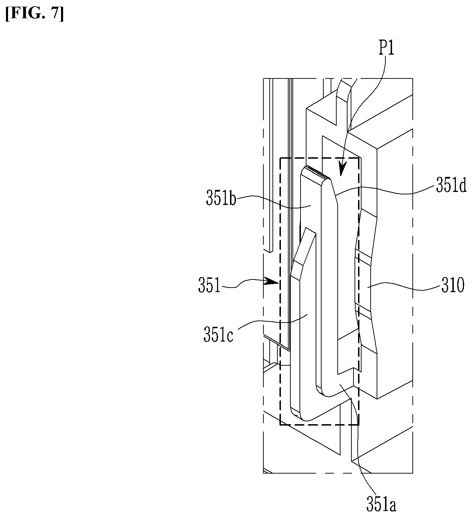

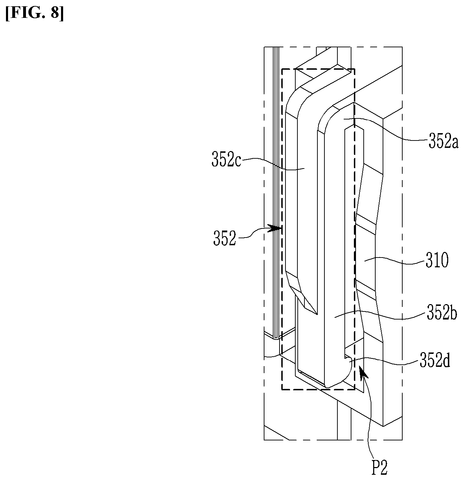

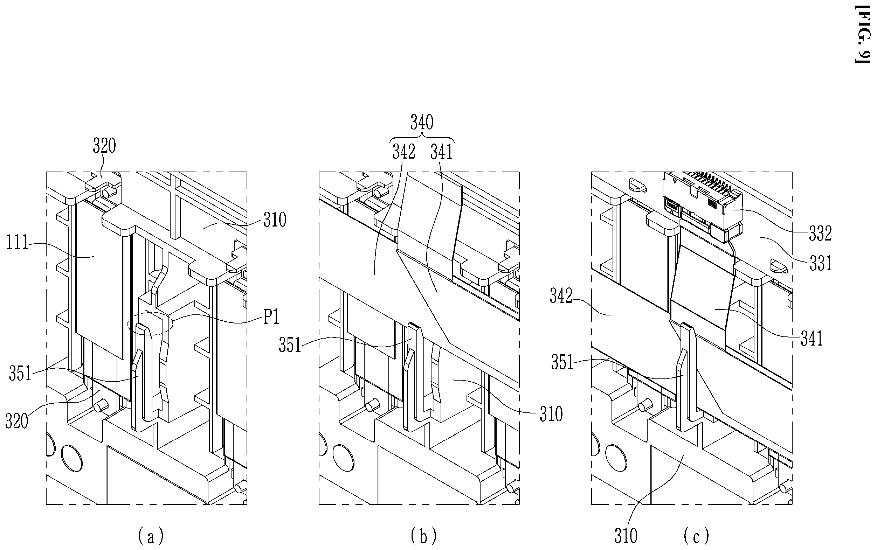

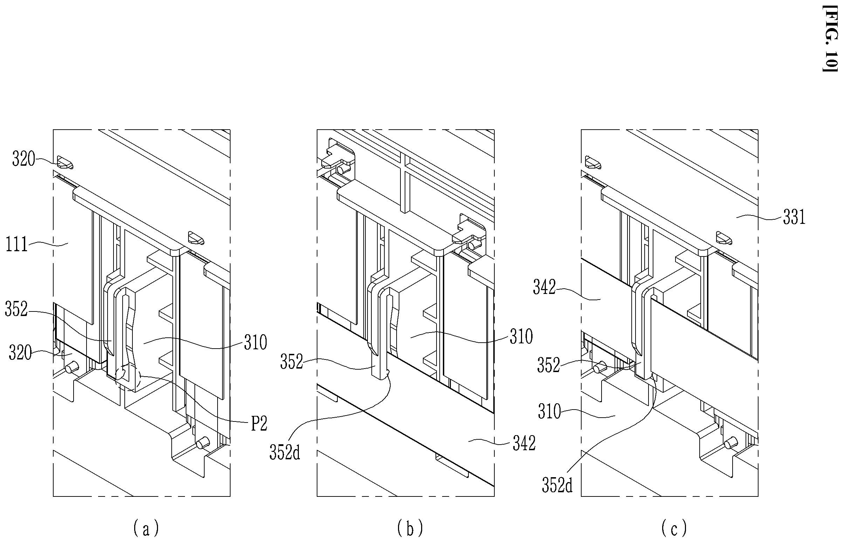

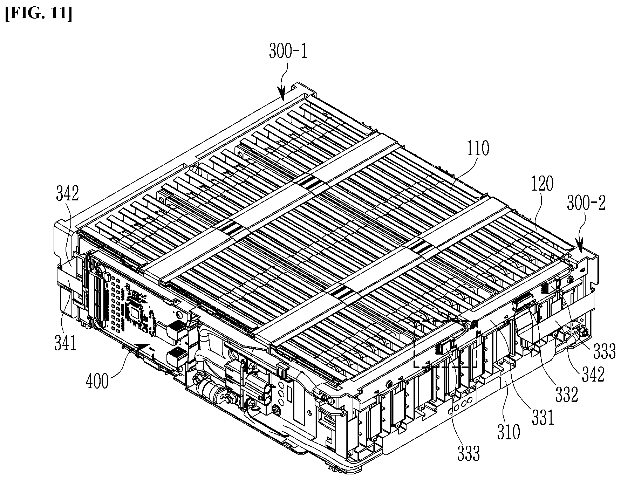

FIGS. 7 and 8 each show an enlarged view of a sensing cable fixing unit 350. FIGS. 9 and 10 each show a case in which a sensing cable 340 is simply assembled to fit into the sensing cable fixing unit 350. FIG. 11 is a reference drawing of FIG. 2, which is a perspective view of the cell module assembly and the electric unit of FIG. 2 as viewed from a different angle.

First, in an embodiment of the present disclosure, as described above, a pair of busbar housing assemblies 300; 300-1, 300-2 are disposed on both side surfaces of the battery cell stack, and each of the pair of busbar housing assemblies 300 is provided with an ICB 330 and a sensing cable 340. Here, for the easy of understanding, the sensing cable 340 provided in the busbar housing assembly 300-1 among the pair of busbar housing assemblies 300 and the sensing cable 340 provided in the other one of the busbar housing assemblies 300-2 are shown by classifying them into reference numbers 341 and 342, respectively.

The sensing cable fixing unit 350 protrudes from the outer surface of the busbar housing 310 and has a bent and extending shape, as enlarged and shown in FIGS. 7 and 8. The sensing cable 340 is inserted and fixed between the outer surface of the busbar housing 310 and the sensing cable fixing unit 350.

For example, the sensing cable fixing unit 350 has a hook shape or is formed in an "L" shape, so that the sensing cable 340 can be easily inserted and fixed in the openings P1, P2 between the outer surface of the busbar housing 310 and the sensing cable fixing unit 350.

An example of a sensing cable fixing unit 350 may be a sensing cable fixing unit 351 in which an opening P1 between the outer surface of the busbar housing 310 and the sensing cable fixing unit 350 faces upward, as enlarged and shown in FIG. 7. In the sensing cable fixing unit 351 in FIG. 7, the opening P1 between the outer surface of the busbar housing 310 and the sensing cable fixing unit 351 faces upward. Accordingly, as shown in FIG. 9, the sensing cable 340 is inserted into the opening P1 between the outer surface of the busbar housing 310 and the sensing cable fixing unit 351 from the upper part of the sensing cable fixing unit 351, and then moves downward to be fitted and assembled with each other.

Further, another example of the sensing cable fixing unit 350 may be a sensing cable fixing unit 352 in which an opening P2 between the outer surface of the busbar housing 310 and the sensing cable fixing unit 350 faces downward, as enlarged and shown in FIG. 8. In the sensing cable fixing unit 352 in FIG. 8, the opening P2 between the outer surface of the busbar housing 310 and the sensing cable fixing unit 350 faces downward. Thus, as shown in FIG. 10, the sensing cable 340 is inserted into the opening between the outer surface of the busbar housing 310 and the sensing cable fixing unit 352 from the lower part of the sensing cable fixing unit 352, and then moves upward to be fitted and assembled with each other.

In FIG. 7, the sensing cable fixing unit 351 includes a first extension part 351a that is protruded and extended from the outer surface of the busbar housing 310, and a second extension part 351b that is formed integrally with the first extension part 351a but is bent from the first extension part 351a to extend upward again. The first extension part 351a may extend, for example, in a horizontal direction, and the second extension part 351b may extend, for example, in a vertical direction. Thus, the sensing cable fixing unit 351 in FIG. 7 may have, for example, an "L" shape. The length of the second extension part 351b may be equal to or greater than the length of the first extension part 351a.

Meanwhile, the sensing cable fixing unit 351 may further include a rigidity complementing part 351c. The rigidity complementing part 351c is added to complement the rigidity of the sensing cable fixing unit 351, and may be formed integrally with the first extension part 351a and the second extension part 351b. The end of the sensing cable fixing unit 351 (i.e., the end located at the opening P1 between the outer surface of the busbar housing 310 and the sensing cable fixing unit 351 may be rounded, and may further have an inclined surface 351d. The end of the sensing cable fixing unit 351 is rounded, which prevents damage to the sensing cable 340 when the sensing cable 340 is inserted into the opening P1. Furthermore, the end of the sensing cable fixing unit 351 further has an inclined surface 351d, so that the sensing cable 340 can be slid along the inclined surface 351d and inserted more smoothly.

Similarly, in FIG. 8, the sensing cable fixing unit 352 includes a first extension part 352a that is protruded and extended from the outer surface of the busbar housing 310, and a second extension part 352b that is formed integrally with the first extension part 352a but is bent from the first extension 352a to extend downward again. The first extension part 352a may extend, for example, in a horizontal direction, and the second extension part 352b may extend, for example, in a vertical direction. Thus, the sensing cable fixing unit 352 in FIG. 8 may have, for example, an "L" shape that is symmetrical up and down. Further, similarly, the sensing cable fixing unit 352 may further include a rigidity complementing part 352c that is added to complement the rigidity of the sensing cable fixing unit 352 but formed integrally with the first extension part 352a and the second extension part 352b.

Meanwhile, as shown in FIG. 8, the end of the sensing cable fixing unit 352, i.e., an opening P2 between the outer surface of the busbar housing 310 and the sensing cable fixing unit 352, may include a protrusion 352d that is bent once again from the second extension part 352b. The protrusion 352d is bent, extended and protruded from the end of the sensing cable fixing unit 352 toward the busbar housing 310. Thus, the sensing cable 340 inserted into the opening P2 facing downward between the outer surface of the busbar housing 310 and the sensing cable fixing unit 352 is prevented from coming out of the sensing cable fixing unit 352 again and being detached from the cell module assembly 100.

The end of the protrusion 352d is separated from the busbar housing 310 as shown in FIG. 8. Thus, the sensing cable 340 can be inserted into the separated portion between the end of the protrusion 352d and the busbar housing 310, but the sensing cable 340 is caught by the protrusion 352d and prevented from coming out of the sensing cable fixing unit 352 again as described above.

The protrusion 352d further provided at the end of the sensing cable fixing unit 352 as shown in FIG. 8 is not included in the end of the sensing cable fixing unit 351 in FIG. 7. However, the present disclosure is not limited to those shown in the figure, and can be modified and changed in various different ways, such as further providing a protrusion that is bent and extended once more at the end of the sensing cable fixing unit 351 in FIG. 7 in a manner similar to that shown in FIG. 8. In some cases, the present disclosure can be modified and changed in various different ways, such as realizing in a manner similar to that shown in FIG. 7 without including a protrusion 352d at the end of the sensing cable fixing unit 352 of FIG. 8.

The sensing cable fixing unit 350 may preferably be formed integrally with the busbar housing 310, but in some cases, the sensing cable fixing unit 350 may be manufactured separately and then coupled integrally with the busbar housing 310.

FIGS. 9 and 10 each show a case where the sensing cable 340 is simply assembled by fitting it into the sensing cable fixing unit 350. FIG. 9(a) shows the state before the sensing cable 340 is assembled to the sensing cable fixing unit 351. FIG. 9(b) shows the state where the sensing cable 340 is located in the opening P1 so that the sensing cable 340 can be assembled to the sensing cable fixing unit 351. FIG. 9(c) shows the state after the sensing cable 340 is assembled (mounted) to the sensing cable fixing unit 351. Similarly, FIG. 10(a) shows the state before the sensing cable 340 is assembled to the sensing cable fixing unit 352. FIG. 10(b) shows the state where the sensing cable 340 is located in an opening P2 so that the sensing cable 340 can be assembled to the sensing cable fixing unit 352. FIG. 10(c) shows the state after the sensing cable 340 is assembled (mounted) to the sensing cable fixing unit 352.

Referring again to FIGS. 2, 3, 7 and 9, the sensing cable fixing unit 351 fixes the sensing cable 341. The sensing cable 341 extends downward from the sensing cable connector 332 of the ICB 330 located at the upper part among the outer surface of the busbar housing 310, changes direction at least once, and extends to the BMS 410 disposed on the side surface of the busbar housing 310 along the width direction (horizontal direction) of the busbar housing 310. When the sensing cable 340 is realized, for example, as an FFC (Flexible Flat Cable), the sensing cable 340 extended downward from the sensing cable connector 332 may be folded at least once and extended to the BMS 410 disposed on the side surface of the busbar housing 310. At this time, if a sensing cable fixing unit 351 is provided at a portion where the extension direction of the sensing cable 341 changes, for example, at a portion where the sensing cable 341 of the FFC is folded, the portion where the extension direction of the sensing cable 341 changes can be fixed, so that the sensing cable 341 can be fixed more effectively (see FIG. 9(c)).

Of course, when the sensing cable 342 passes through the location where the sensing cable fixing unit 351 is disposed from the sensing cable connector 332 of the ICB 330 provided in the busbar housing assembly 300-2 located on the opposite side of the cell module assembly 100, the sensing cable fixing unit 351 can further fix the sensing cable 342 together (see FIG. 9(c)).

In summary, since the sensing cable fixing unit 351 is configured such that the opening P1 faces upward, it is more advantageous for fixing the sensing cables 340; 341 to the vicinity of the portion where the extension direction of the sensing cable 340 changes. For example, it is more advantageous for fixing the sensing cable 340 to the vicinity of the portion where the extension direction changes in the direction where the BMS 410 is located, while extending from the sensing cable connector 332 located at the upper part. Of course, the sensing cable fixing unit 351 is also advantageous for fixing the sensing cables 340; 342 that are disposed across the sensing cable fixing unit 351.

Next, referring to FIGS. 2, 3, 8 and 10, the sensing cable fixing unit 352 fixes the sensing cables 340; 342 that are disposed across the sensing cable fixing unit 352. Furthermore, referring to FIG. 11, which is a reference diagram of FIG. 2, FIG. 11 shows the cell module assembly and the electrical unit of FIG. 2 as viewed from a different angle. The sensing cable 342 is connected to the BMS 410 (connector terminal 411) through the sensing cable connector 332 of the ICB 330 of the busbar housing assembly 300-2, the outer surface of the busbar housing 310 of the busbar housing assembly 300-2, the outer surface of the end plate 120, and the outer surface of the busbar housing 310 of the busbar housing assembly 300-1. More specifically, the sensing cable 342 extends downward from the sensing cable connector 332 of the ICB 330 of the busbar housing assembly 300-2, changes direction at least once to extend along the width direction (horizontal direction) of the busbar housing 310 of the busbar housing assembly 300-2, then extends across the end plate 120 (extends along the width direction (horizontal direction) of the end plate 120), then extends again along the width direction (horizontal direction) of the busbar housing 310 of the busbar housing assembly 300-1, and then is finally connected to the BMS 410.

When the busbar housing assembly 300-1 is viewed as a reference in FIGS. 2, 3, 8 and 10, the sensing cable 342 is disposed across the sensing cable fixing unit 352 (see FIG. 10(c)). Of course, the present disclosure is not limited to those shown in the figures, and although not shown herein, if the sensing cable 341 is also disposed across the sensing cable fixing unit 352, the sensing cable fixing unit 352 can fix the sensing cable 341 together with the sensing cable 342.

Meanwhile, referring to FIGS. 2 and 3, the opening P1 of the sensing cable fixing unit 351 is located at the upper part, while the opening P2 of the sensing cable fixing unit 352 is located at the lower part. Thus, it is possible to exhibit the effect of fixing the sensing cable 340 up and down, which passes through both sensing cable fixing unit 351 and sensing cable fixing unit 352. Accordingly, the sensing cable 340 can be fixed more firmly.

Meanwhile, the present disclosure is not limited to those shown in the figures, and the sensing cable fixing unit 351 may be provided by changing the number thereof. Of course, the sensing cable fixing unit 352 may also be provided by changing the number thereof. Depending on the cases, various modifications and changes are possible, for example, only one or a plurality of sensing cable fixing units 351 with the opening P1 located at the upper part may be provided, and only one or a plurality of sensing cable fixing units 352 with the opening P2 located at the lower part may be provided.

In addition, while FIG. 2 shows a case where the busbar housing assembly 300-1 is provided with a sensing cable fixing unit 350, FIG. 11 shows a case where busbar housing assembly 300-2 on the opposite side is not provided with a sensing cable fixing unit 350. However, the present disclosure is not limited to those shown in the figures, and both a pair of busbar housing assemblies 300 (i.e., the busbar housing assembly 300-1 and the busbar housing assembly 300-2 may be provided with a sensing cable fixing unit 350. In addition, the combination and number of the sensing cable fixing unit 351 with the opening P1 located at the upper part and the sensing cable fixing unit 352 with the opening P2 located at the lower part can be variously modified and changed as described above.

According to an embodiment of the present disclosure, the busbar housing 310 is provided with a sensing cable fixing unit 350, and the sensing cable 340 can be easily assembled and fixed by fitting it into the sensing cable fixing unit 350. In the prior art, the sensing cable 340 is coupled with a separate fixing part such as a cable tie, but according to the present disclosure, the sensing cable 340 can be easily assembled and fixed to the busbar housing assembly 300 even without the need for a separate additional fixing member.

Next, according to an embodiment of the present disclosure, the busbar housing assembly 300 includes a sensing cable guide unit 360. A sensing cable guide unit 360 for guiding the sensing cable 340 is provided on the outer surface of the busbar housing 310.

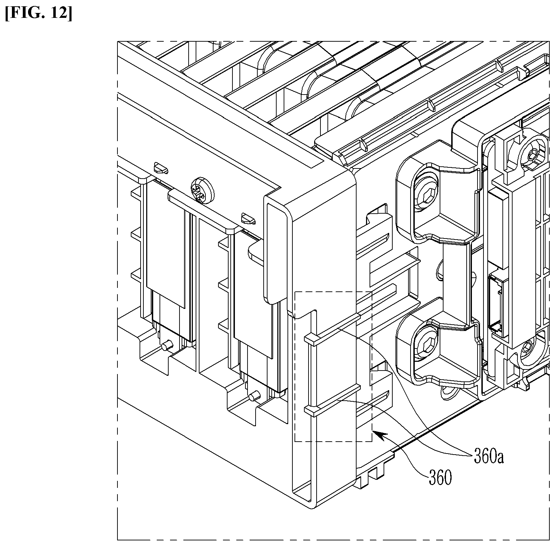

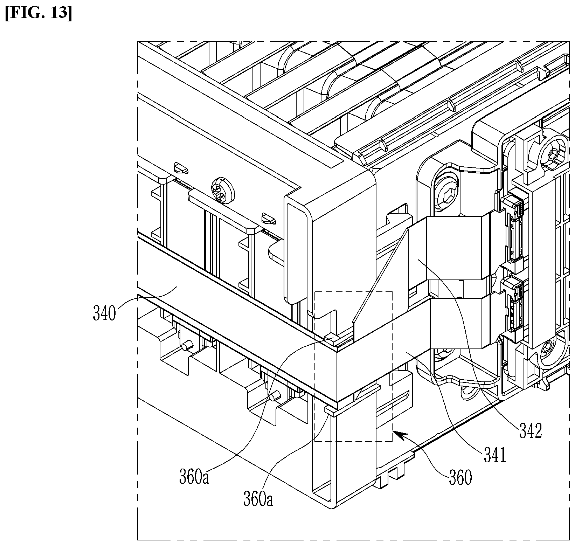

FIG. 12 is an enlarged view of an embodiment of the sensing cable guide unit. FIG. 12 shows a state before the sensing cable 340 is mounted on the sensing cable guide unit 360. FIG. 13 is an enlarged view showing a state in which the sensing cable 340 is mounted on the sensing cable guide unit 360 of FIG. 12.

The sensing cable guide unit 360 may be provided on the side edge and/or side surface among the outer surface of the busbar housing 310, for example, as shown in FIG. 12.

First, the sensing cable 340 passes over the busbar housing 310 as described above, and is assembled and fixed to the sensing cable fixing unit 350. Further, as shown in FIG. 13, the sensing cable 340 passes through the side edge where the busbar housing 310 and the end plate 120 are coupled, and at this time, the sensing cable 340 is guided by the sensing cable guide unit 360.

Referring to FIGS. 12 and 13, the sensing cable guide unit 360 includes a pair of guide protrusions 360a. The guide protrusions 360a may have, for example, a rib shape. The pair of guide protrusions 360a are spaced apart by a distance equal to or greater than the width of the sensing cable 340. Thereby, the sensing cable 340 passes between the pair of guide protrusions 360a. At this time, the upper and lower parts of the sensing cable 340 are supported by a pair of guide protrusions 360a, respectively.

A pair of guide protrusions 360a of the sensing cable guide unit 360 may be provided on the side surface of the busbar housing 310, or may be provided on the side edge of the busbar housing 310 (i.e., the edge where the side surface and the front surface of the busbar housing 310 meet). Alternatively, as shown herein, the pair of guide protrusions 360a may be integrally formed on both the side surface and the side edge of the busbar housing 310.

According to the present disclosure, a sensing cable guide unit 360 is provided in the busbar housing assembly 300, that is, the sensing cable 340 passes between a pair of guide protrusions 360a of the sensing cable guide unit 360, thereby allowing the sensing cable 340 to be properly aligned with the cell module assembly 100 and preventing it from being detached from the cell module assembly 100

Meanwhile, the above-described embodiments describe, as an example, a case where electrode leads 111 are provided respectively on both sides of the battery cell 110 and a pair of busbar housing assemblies 300 are provided on both ends of the battery cell stack, respectively, but the present disclosure is not limited to those described above. It is also applicable to a case where all the electrode leads 111 are provided on one side of the battery cell 110, and the busbar housing assembly 300 is disposed on one end of the battery cell stack, i.e., one end toward which the electrode leads 111 face. That is, even in this case, the sensing cable fixing unit 350 and the sensing cable guide unit 360 provided in the busbar housing assembly 300 described above are applicable similarly.

Next, according to an embodiment of the present disclosure, the busbar housing assembly 300 includes a structure for guiding and fixing the thermistor cable.

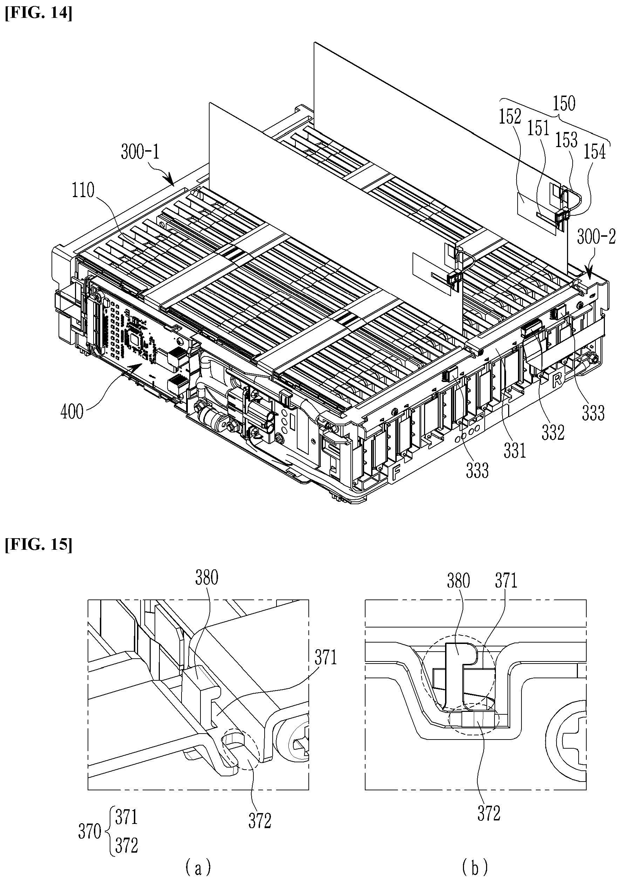

First, referring again to FIG. 11, the ICB 330 includes a thermistor cable connector 333 for receiving temperature information sensed by the thermistor 151 (see FIG. 14). In this regard, FIG. 14 is a perspective view showing a state in which only the thermistor assembly 150 including the thermistor 151 is separated from FIG. 11, and FIGS. 15 and 16 show an enlarged view of the thermistor cable guide unit and the thermistor cable fixing unit in FIG. 11.

First, referring to FIG. 14, the thermistor assembly 150 includes a thermistor 151 for sensing the temperature of a battery cell stack, and a thermistor plate 152 for more easily disposing the thermistor 151 within the battery cell stack. The thermistor 151 is inserted into the thermistor insertion part of the thermistor plate 152. The thermistor plate 152 into which the thermistor 151 is inserted is disposed in parallel to a large area of the battery cell 110. A thermistor cable 153 is electrically connected to the thermistor 151 to transmit temperature information sensed from the thermistor 151 to the ICB 330. A thermistor cable pin 154 located at the end of the thermistor cable 153 is coupled to a thermistor cable connector 333 of the ICB 330.

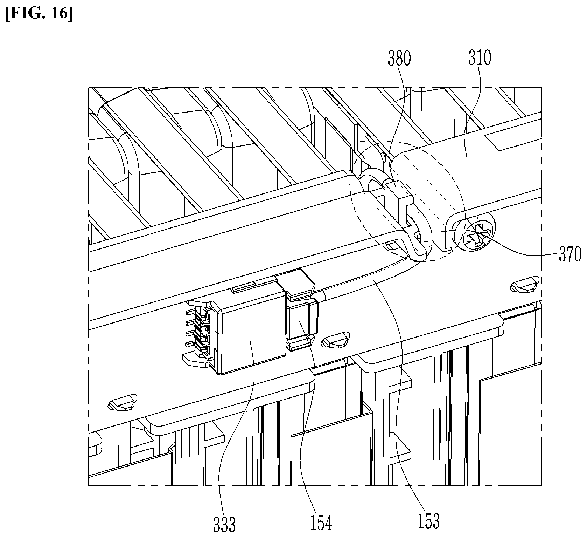

FIGS. 15 and 16 show enlarged views of the thermistor cable guide unit 370 and the thermistor cable fixing unit 380. FIG. 15 shows the thermistor cable guide unit 370 and thermistor cable fixing unit 380, but showing a state before the thermistor cable 153 is mounted. FIG. 15(a) is a perspective view, and FIG. 15(b) shows a case when the thermistor cable guide unit 370 and thermistor cable fixing unit 380 are viewed from the front. FIG. 16 shows a case when the thermistor cable 153 is mounted.

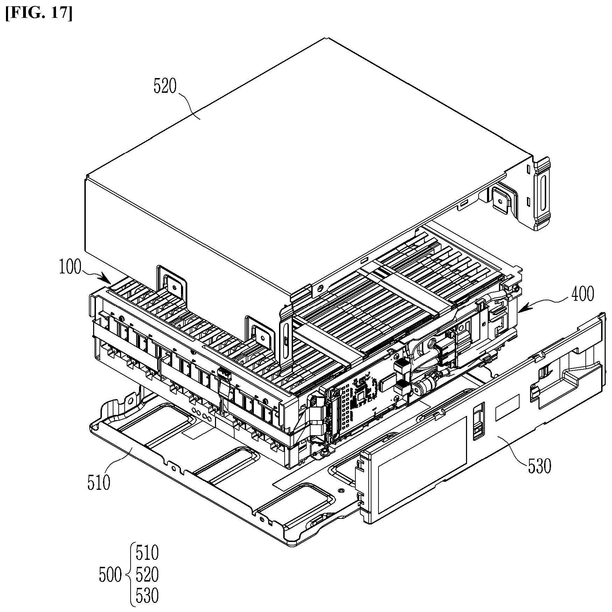

The thermistor cable guide unit 370 is provided at the upper end of the busbar housing 310. The thermistor cable guide unit 370 has a first concave part 371 that is concavely formed in a vertical direction from the upper end of the busbar housing 310. The thermistor cable 153 extends from the thermistor 151 to the outside of the busbar housing 310, wherein the thermistor cable 153 passes through the first concave part 371 of the thermistor cable guide unit 370. Thereby, the thermistor cable 153 is not disposed to protrude from the upper end of the busbar housing 310. Even if the thermistor cable 153 passes through the upper end of the busbar housing 310, the upper end of the busbar housing 310 is flattened when viewed as a whole. That is, space efficiency can be further improved. In addition, since the thermistor cable 153 does not protrude above the upper end of the busbar housing 310, the thermistor cable 153 can be protected from an unintended external impact to the thermistor cable 153. When assembling the pack case 500 which will be described later, the pack case 500 (see FIG. 17) does not get caught by the thermistor cable 153, which increases the convenience of the assembly process.

The thermistor cable guide unit 370 also has a second concave part 372 that is concavely formed in a horizonal direction from the upper end of the busbar housing 310. The second concave part 372 is concavely formed from the outer surface of the busbar housing 310 toward the inside. The thermistor cable 153 that has passed through the first concave part 371 of the thermistor cable guide unit 370 passes through the second concave part 372 of the thermistor cable guide unit 370. The direction of the thermistor cable 153 can be changed in the second concave part 372 so that the thermistor cable 153 passes along an upper part of the ICB 330. That is, the second concave part 372 guides the thermistor cable 153 that comes out of the busbar housing 310 so that the thermistor cable 153 passes along the top of the ICB 330. At this time, the second concave part 372 also has a function of fixing the thermistor cable 153.

Further, according to the present disclosure, a thermistor cable fixing unit 380 is provided together with a thermistor cable guide unit 370 at the upper end of the busbar housing 310. The thermistor cable fixing unit 380 is formed in a hook shape and fixes a thermistor cable 153 passing through the thermistor cable guide unit 370. The thermistor cable fixing unit 380 may be disposed, for example, in the first concave part 371 of the thermistor cable guide unit 370. At this time, the thermistor cable 153 passes between the lower end of the first concave part 371 and the upper end of the hook of the thermistor cable fixing unit 380. Thereby, the thermistor cable 153 can be fixed to the busbar housing 310 without being detached from the busbar housing 310.

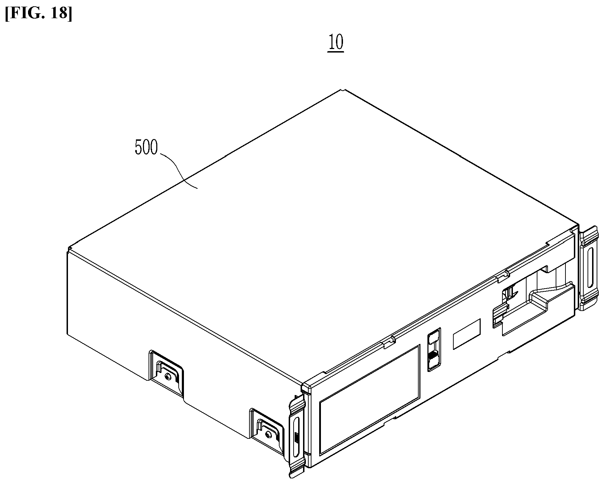

FIG. 17 shows a case in which the cell module assembly and electrical unit in FIGS. 2 to 16 are housed in a pack case to form a battery pack. FIG. 18 shows the battery pack completed by assembling the components of the battery pack of FIG. 17.

The battery pack 10 includes a cell module assembly 100 and an electrical unit 400 in FIGS. 2 to 16, and the cell module assembly 100 and the power unit 400 are housed inside a pack case 500.

The pack case 500 includes a lower case member 510 and an upper case member 520. The lower case member 510 and the upper case member 520 are coupled to surround the outer side of the cell module assembly 100. For example, the lower case member 510 may have a substantially flat plate shape. For example, the upper case member 520 may have a U-shaped frame shape. The cell module assembly 100 may be seated on the lower case member 510 having a flat plate shape, and the upper case member 520 may cover the top of the cell module assembly 100.

However, the present disclosure is not limited to those described above, and various modifications and variations are possible, for example, the lower case member 510 and the upper case member 520 may be L-shaped frames, or may be roll-pressed type mono frames.

Further, the pack case 500 further includes a cell module assembly 100 and a front cover 530 disposed on the front surface of the electrical unit 400.

An insulating sheet (not shown) having electrical insulation properties is provided between the cell module assembly 100 and the lower case member 510. In addition, an insulating sheet (not shown) having electrical insulation properties is provided between the cell module assembly 100 and the upper case member 520. The insulating sheet may be, for example, a film made of PC (polycarbonate), PET, PP, or a combination thereof.

In addition, the energy storage system (ESS) according to the present disclosure comprises one or more battery packs according to the present disclosure described above. Further, the energy storage system according to the present disclosure may further comprise general components included in the energy storage system in addition to the battery pack.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

10: battery pack
100: cell module assembly
110: battery cell
111: electrode lead
120: end plate
140: strap
150: thermistor assembly
151: thermistor
152: thermistor plate
153: thermistor cable
154: thermistor cable pin
200: blocking member
300: busbar housing assembly
310: busbar housing
320: busbar electrode
330: ICB
331: printed circuit board
332: sensing cable connector
333: thermistor cable connector
340: sensing cable
350: sensing cable fixing unit
360: sensing cable guide unit
370: thermistor cable guide unit
380: thermistor cable fixing unit
400: electrical unit
410: BMS
420: electrical unit housing
430: power cable
500: pack case
510: lower case member
520: upper case member
530: front cover

## Claims

1. A cell module assembly comprising:
a battery cell stack in which a plurality of battery cells are stacked;
a busbar housing disposed on a surface toward which the electrode lead of the battery cells faces;
an Inter Connection Board ICB including a printed circuit board for transmitting data between the battery cells and a Battery Management System BMS; and
a sensing cable that electrically connects between the ICB and the BMS,
wherein the busbar housing comprises at least one sensing cable fixing unit protruding from an outer surface of the busbar housing and having a bent and extended shape to fix the sensing cable, and
wherein the sensing cable is inserted and fixed between the outer surface of the busbar housing and the sensing cable fixing unit.

2. The cell module assembly according to claim 1, wherein:
the sensing cable is inserted and fixed into an opening between the outer surface of the busbar housing and the sensing cable fixing unit.

3. The cell module assembly according to claim 2, wherein:
a direction toward which at least one opening among the plurality of sensing cable fixing units faces and a direction toward which at least another opening among the plurality of sensing cable fixing units faces are opposite to each other.

4. The cell module assembly according to claim 2, wherein:
the sensing cable fixing unit comprises,
a first extension part that is protruded and extended from the outer surface of the busbar housing; and
a second extension part that is bent and extended from the first extension part, and
the length of the second extension part is equal to or greater than the length of the first extension part.

5. The cell module assembly according to claim 4,
further comprising a protrusion that is bent and extended again from an end of the second extension toward the busbar housing, wherein:
the sensing cable is inserted and fixed between the outer surface of the busbar housing and the end of the protrusion of the sensing cable fixing unit, and
the inserted sensing cable is caught by the protrusion and prevented from being detached to the outside form the sensing cable fixing unit.

6. The cell module assembly according to claim 5, wherein:
the second extension extends downward, and
the opening intro which the sensing cable is inserted between the outer surface of the busbar housing and the sensing cable fixing unit faces downward.

7. The cell module assembly according to claim 4, wherein:
the sensing cable is inserted and fixed into an opening between the outer surface of the busbar housing and the end of the second extension part of the sensing cable fixing unit, and
the end of the second extension part is rounded.

8. The cell module assembly according to claim 7, wherein:
the end of the second extension part further comprises an inclined surface so that the sensing cable inserted into the opening slides into the sensing cable fixing unit.

9. The cell module assembly according to claim 4, wherein:
the first extension part extends in a horizontal direction,
the second extension part extends in a vertical direction, and
an opening in which the sensing cable is inserted between the outer surface of the busbar housing and the sensing cable fixing unit faces toward any one of the upper part or the lower part.

10. The cell module assembly according to claim 1, wherein:
the sensing cable fixing unit has a hook shape.

11. The cell module assembly according to claim 1, wherein:
the sensing cable is disposed along a width direction of the busbar housing, and
a plurality of the sensing cable fixing units are provided and disposed along a width direction of the busbar housing.

12. The cell module assembly according to claim 1, wherein:
the sensing cable fixing unit is formed integrally with the busbar housing.

13. The cell module assembly according to claim 1, wherein:
the busbar housing further comprises a sensing cable guide unit having a pair of guide projections that protrude from an outer surface of the busbar housing so as to guide the sensing cable, and
the sensing cable passes between the pair of guide projections.

14. The cell module assembly according to claim 13, wherein:
the guide protrusion has a rib shape.

15. The cell module assembly according to claim 13, wherein:
the sensing cable guide unit is formed on at least one of a side surface of the busbar housing and a side edge of the busbar housing.

16. The cell module assembly according to claim 1,
further comprising a pair of end plates that are disposed at the outermost of the battery cell stack and face each other, wherein:
the BMS is disposed on an outer surface of one end plate among the pair of end plates,
the busbar housing is provided as a pair of busbar housings and respectively provided at both surfaces of the battery cell stack, and each of the pair of end plates connects both ends of the pair of busbar housings, and
the sensing cable fixing unit is provided on the busbar housing closer to the BMS among the pair of busbar housings.

17. The cell module assembly according to claim 1,
further comprising a pair of end plates that are disposed at the outermost of the battery cell stack and face each other, wherein:
the BMS is disposed on the outer surface of one of the end plates of the pair,
the busbar housing is provided as a pair of busbar housings and respectively provided at both surfaces of the battery cell stack, and each of the pair of end plates connects both ends of the pair of busbar housings, and
the sensing cable fixing unit is provided on each of the pair of busbar housings.

18. The cell module assembly according to claim 1, wherein:
the sensing cable is a Flexible Flat Cable FFC.

19. The cell module assembly according to claim 1, further comprising:
a thermistor disposed within the battery cell stack and sensing the temperature of the battery cell; and
a thermistor cable electrically connected between the thermistor and the ICB,
wherein the busbar housing further comprises a thermistor cable guide unit concavely formed from the upper end of the busbar housing, and
wherein the thermistor cable passes through the thermistor cable guide unit.

20. The cell module assembly according to claim 19, wherein:
the thermistor cable guide unit comprises:
a first concave part concave formed in a vertical direction from the upper end of the busbar housing; and
a second concave part concavely formed in a horizontal direction from the outer surface of the busbar housing,
wherein the thermistor cable passes through the first concave part so as to come out from the thermistor to the outside of the busbar housing, and changes an extension direction at the second concave part to pass along the top of the ICB.

21. The cell module assembly according to claim 19, wherein:
the busbar housing further comprises a thermistor cable fixing unit having a hook shape and disposed together with the thermistor cable guide unit at the upper end of the busbar housing, and
the thermistor cable passes between the thermistor cable guide unit and the thermistor cable fixing unit.

22. A battery pack comprising:
a cell module assembly according to claim 1,
an electrical unit including the BMS disposed on one surface of the cell module assembly; and
a pack case that houses the cell module assembly and the electrical unit.

23. An energy storage system comprising a battery pack according to claim 22
